Europäisches Patentamt

European Patent Office

Office européen des brevets

(11) Publication number: 0 369 625 A1

## EUROPEAN PATENT APPLICATION

(21) Application number: 89311080.9

(22) Date of filing: 27.10.89

(51) Int. Cl.5: **B60D 1/06**

(30) Priority: 28.10.88 GB 8825276

(43) Date of publication of application:
23.05.90 Bulletin 90/21

(84) Designated Contracting States:
AT BE CH DE ES FR GB GR IT LI LU NL SE

(71) Applicant: AVONRIDE LIMITED
Speltar Site Caerau
Maesteg Mid Glamorgan CF34 OAQ(GB)

(72) Inventor: Nugent, Malcolm Francis Roger
24 Danygraig Avenue
Porthcawl Mid-Glamorgan CF36 5AA(GB)

(74) Representative: Lainé, Simon James et al
Wynne-Jones, Lainé & James Morgan
Arcade Chambers 33, St.Mary Street
Cardiff CF1 2AB(GB)

(54) **A ball and socket coupling.**

(57) A socket device for a ball and socket coupling
has a body (1) and a primary latch member (9)
which combine to provide a socket by which it can
be hitched to a ball, the primary latch member being
held in the operative position by a spring-loaded (23)
secondary latch member (15). This can be secured
in a position trapping the primary latch member (9)
by a lock (22) mounted in the secondary latch mem-
ber (15). The lock may be fixed or be in the form of
a spring-loaded plunger. When unlocked, the spring
(23) that biases the plunger acts through the latter
also to provide the bias for the secondary latch
member. When the plunger is pressed down, it can
be locked to the secondary latch member and the
fully compressed spring (23) then provides an abut-
ment preventing movement of the secondary latch
member (15).

Fig.1.

## A Ball and Socket Coupling

This invention relates to ball and socket couplings.

Trailers and caravans are most commonly attached to the towing vehicle by a ball and socket coupling, the towing vehicle having the ball on a bracket at the rear, and the trailer or caravan having a socket member at the leading end of a towing bar. This is lowered on to the ball and held by a spring loaded latch member.

That is secure enough for towing, but it is not secure against theft. Someone with a suitably equipped vehicle and a spare registration plate can easily transfer an unguarded trailer or caravan to his own towing bracket and drive away. Since trailers and caravans are not individually registered, tracing them can be extremely difficult.

Locking a trailer coupling is not new, but the disadvantage of existing systems is that they use an external device such as a padlock or a bar on the lifting handle. Those can often be quite easily broken or cut off.

It is the aim of this invention to provide a more secure locking system.

According to the present invention there is provided a socket coupling device for a ball and socket joint, the device having a body with a part spherical socket, a first latch member pivoted on said body and being spring biased to an operative position in which a portion thereof provides an extension to said socket thereby captively to embrace a ball, and a manually releasable second latch member carried by said body and spring biased into a position co-operating with the first latch member to hold the latter in its operative position, characterised in that a locking device is provided housed within one of said members or said body and is arranged for securing said second latch member in said co-operating position.

Preferably, the locking device is key operated, although it could be a combination lock.

Conveniently, the locking device is carried by the second latch member and, in its locked condition, co-operates with said body to prevent the second latch member from shifting. The locking device may be fixed relative to the second latch member or it may be movable relative thereto. In the latter case, it will be lockable to the second latch member in one position where it co-operates with said body to prevent said shifting. Preferably spring means act between said body and the locking device to urge the latter away from said one position and, through the locking device, also to urge the second latch member to said co-operating position. The spring means may be fully compressed when the locking device is locked in said one position and thereby provide an abutment preventing movement of said second latch member. Conveniently the locking device will be in the form of a spring-loaded plunger housed in the second latch member.

The second latch member will preferably be pivoted to the body, although it could be a sliding element for example. Conveniently, the first latch member will have a snap action past the second member when moving into the operative position.

The ball to which this is coupled does not have to be on a towing vehicle. For example, it may be part of a fixed structure at the home base of the trailer or caravan. The latter can therefore be made secure without its usual towing vehicle.

For a better understanding of the invention one embodiment will now be described, by way of example, with reference to the accompanying drawings, in which:

Figure 1 is a longitudinal vertical section through the socket device of a ball and socket coupling,

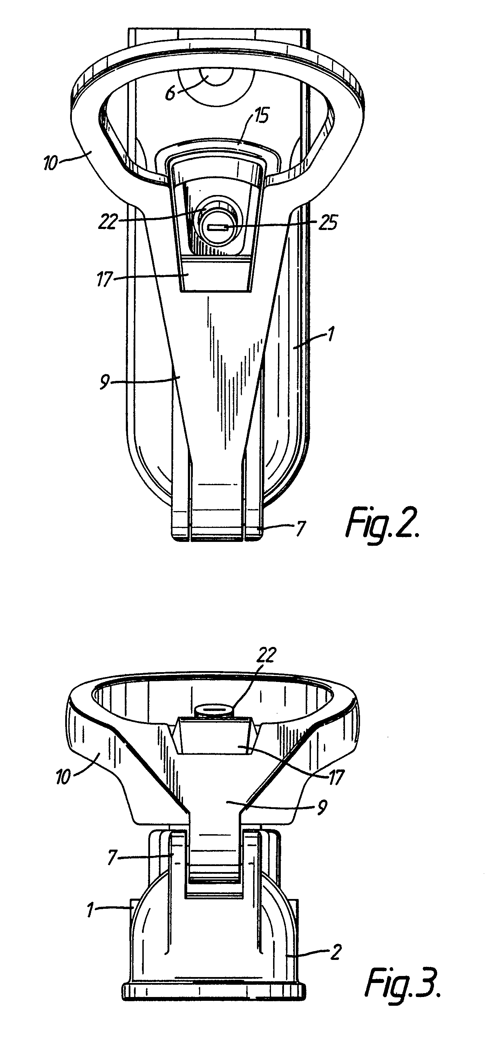

Figure 2 is a plan view of the socket device of Figure 1, and

Figure 3 is an end view of the socket device of Figure 1.

The coupling has a socket device with a body 1 formed with a part-spherical socket 2 at the leading end, opening downwardly and rearwardly. Immediately behind this there is a generally vertical slot 3 with an arcuate rear wall 4, at the top of which a ledge 5 projects forwardly. Behind this, the body is formed as an inverted channel member with holes 6 for bolting to the leading end of a tow bar of a trailer.

At the leading end of the body 1, above the socket 2, there is an integrally formed clevis 7 between whose lugs is a transverse pin 8. The leading end of a primary latch member 9 is pivoted on this and it can be swung up and down by a handle 10 at its rear end. This member 9 has an arm 11 which extends downwardly into the slot 3, and its leading face has a curved recess 12 matching the radius of the socket 2. When the member 9 is in the lowered position, as shown in the Figures, the recess 12 will engage partly underneath the ball attached to the towing vehicle and thus trap the coupling to it. The member 9 is urged into this latching position by a spring 13 acting between the ledge 5 and a rearwardly extending lug 14 at the base of the arm 11. The spring is confined by the side walls of the slot 3, the rear of the arm 11 and the wall 4. Thus far this form of construction is known.

The member 9 can be held captive in this engaged position by a secondary latch member 15 pivoted on a transverse pin 16 immediately above the ledge 5. It extends up through the handle 10 and at its upper end it has a forwardly projecting nose 17 which can engage over a step 18 formed by a detent 19 at the rear upper corner of the member 9 and thus hold that member down. When the member 15 is pivoted rearwardly, the nose 17 is moved clear of the detent 19, and the handle 10 can be raised. The upper surface 20 of the nose 17 is inclined forwardly and downwardly so that a rear lower corner 21 of the member 9 can wedge the member 15 back as the member 9 is spring urged downwardly, the member 15 closing forwards with a snap action as the latching position is reached.

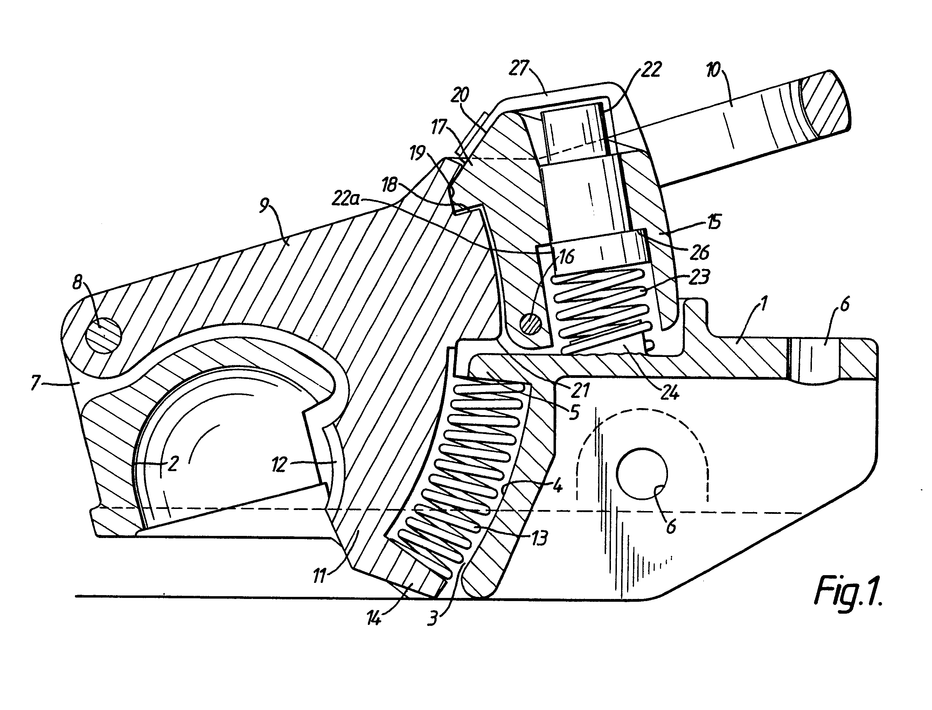

The secondary latch member 15 can be secured in that position by a locking device 22 in the form of a stepped plunger. A spring 23, located by an inclined abutment 24 on the top of the body 1, acts upwardly against the lower end of the device 22. These parts are largely housed and captive within a stepped cylindrical bore through the member 15, although the device 22 itself is not a corresponding complete body of revolution, having a flat 22 a on its larger diameter lower portion which can co-operate with means not shown in Figure 1 to prevent the device rotating. When the device 22 is released, as shown in Figure 1, the spring 23 pushes it upwards, and in turn the device 22 urges the member 15 into the latching position. But when the locking device 22 is pushed downwardly and a key (not shown) turned in a slot 25 in its exposed upper end (the key may be used to do the pushing down) the device 22 is secured in a lowered position, for example by an element engaging under the step 26 in the bore through the member. Such an element could be spring biased automatically so to engage, the key being needed only to release it. The spring 23 is then fully compressed and provides a solid abutment preventing the member 15 from pivoting rearwardly. The member 9 is thus trapped, and the socket device is effectively locked on the ball.

To release this, the key is inserted and turned, the device 22 springs upward, and the member 15 can then be tilted back (pressing against the inclined surface 20 for example) to free the member 9 for lifting by the handle 10.

When fitting the coupling to the ball, the handle 10 can of course be used to lift and manoeuvre the leading end of the trailer.

It may be advisable to protect the locking device against the weather and, particularly for boat trailers, against salt water. This may be achieved by a hood in the form of a plastics cover 27, as shown in Figure 1.

In an alternative arrangement (not shown) the locking device is not a plunger but is fixed within the member 15. At its lower end it may have a formation, such as a rotary cam to co-operate with a modified abutment 24. When unlocked, the cam is free of the abutment and the latch member 15 is free to pivot, but when locked the cam is turned to wedge against the abutment and thus hold the member against rearward movement.

While it has been found convenient to house the locking device in the secondary latch member 15, it could be housed in the primary latch member 9 or by the body 9. The basic requirement is that a key-operated or combination locking device, preferably accessible only over a very limited area around the keyhole or visible part of the combination, should engage the secondary latch member when that is holding the primary latch member in the operative position and prevent it disengaging.

## Claims

1. A socket coupling device for a ball and socket joint, the device having a body (1) with a part spherical socket (2), a first latch member (9) pivoted on said body and being spring biased (13) to an operative position in which a portion (12) thereof provides an extension to said socket thereby captively to embrace a ball, and a manually releasable second latch member (15) carried by said body and spring biased (23) into a position co-operating with the first latch member (9) to hold the latter in its operative position, characterised in that a locking device (22) is housed within one of said members or said body and is arranged for securing said second latch member (15) in said co-operating position.

2. A socket coupling device according to Claim 1, characterised in that the locking device (22) is carried by the second latch member (15) and, in its locked condition, co-operates with said body (1) to prevent the second latch member from shifting.

3. A socket coupling device according to Claim 2, characterised in the locking device (22) is fixed relative to the second latch member (15).

4. A socket coupling device according to Claim 2, characterised in that the locking device is movable relative to the second latch member, being lockable thereto in one position where it co-operates with said body (1) to prevent said shifting.

5. A socket coupling device according to Claim 4, characterised in that spring means (23) act between said body (1) and the locking device (22) to urge the latter away from said one position and, through the locking device, also to urge the second latch member (15) to said co-operating position.

6. A socket coupling device according to Claim 5, characterised in that the spring means (23) are fully compressed when the locking device (22) is locked in said one position and thereby provide an abutment preventing movement of said second latch member (15).

7. A socket coupling device according to Claim 4, 5 or 6, characterised in that the locking device (22) is in the form of a spring-loaded plunger housed in the second latch member (15).

8. A socket coupling device according to any preceding claim, characterised in that the second latch member (15) is pivoted to said body (1).

9. A socket coupling device according to any preceding claim, characterised in that the second latch member (15) is slidable relative to said body (1).

10. A socket coupling device according to any preceding claim, characterised in that the first latch member (9) has a snap action past the second member (15) when moving into the operative position.

Fig.1.

EP 0 369 625 A1

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A- 763 874 (H. BRADLEY) <br> * Whole document * <br> --- | 1 | B 60 D 1/06 |
| A | US-A-3 446 520 (GENERAL PROCESSING CORP.) <br> * Column 2, line 57 - column 3, line 56; figures 1-7 * <br> --- | 1 | |
| A | DE-A-1 655 961 (B. SYLVESTER) <br> * Whole docment * <br> --- | 1 | |
| A | US-A-3 796 074 (DEMPCO) <br> * Column 2, lines 43-59; figures 1-4 * <br> --- | 1 | |
| A | GB-A-1 352 025 (G. BARNES) <br> * Page 1, lines 22-37; figures 1-2 * <br> ----- | 1 | |

TECHNICAL FIELDS
SEARCHED (Int. Cl.5)

B 60 D

The present search report has been drawn up for all claims

| Place of search | Date of completion of the search | Examiner |
|---|---|---|
| THE HAGUE | 02-02-1990 | LINTZ C.H. |